(19) Europäisches Patentamt
European Patent Office
Office européen des brevets

(11) Publication number : **0 466 242 B1**

(12) **EUROPEAN PATENT SPECIFICATION**

(45) Date of publication of patent specification : **02.02.94 Bulletin 94/05**

(51) Int. Cl.$^5$ : **A21D 6/00,** A21D 13/00

(21) Application number : **91201669.8**

(22) Date of filing : **01.07.91**

# (54) Preproofed, frozen croissants.

(30) Priority : **10.07.90 EP 90307551**

(43) Date of publication of application : **15.01.92 Bulletin 92/03**

(45) Publication of the grant of the patent : **02.02.94 Bulletin 94/05**

(84) Designated Contracting States : **AT BE CH DE DK ES FR GB GR IT LI NL SE**

(56) References cited :
**EP-A- 0 145 367**
**EP-A- 0 279 496**
**US-A- 3 845 219**

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Armfield, Duncan James**
**45 Meadowcroft, Heswall Hills**
**Barnston, Wirral (GB)**
Inventor : **Graveland, Aris, Vlaardingen Lab.**
**Olievier van Noortlaan 120**
**NL-3133 AT Vlaardingen (NL)**
Inventor : **King, David Michael**
**Bennett Close Willaston**
**S.Wirral, Cheshire L64 2XF (GB)**

(74) Representative : **Tan, Bian An, Ir. et al**
**Unilever N.V. Patent Division P.O. Box 137**
**NL-3130 AC Vlaardingen (NL)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue Saint-Denis, 75001 PARIS

## Description

In literature many attempts to come to a preproofed, frozen croissant with good product properties are described. E.g. in EP 114 450 a method is given in which a yeast-containing dough is prepared at ambient temperature, the dough is prefermented at 20-30°C for a short period, the dough is separated in portions, which are formed, after which the formed dough portions are fermented in such a way, that when the frozen dough is heated a volume increase of the dough is obtained, however the specific volume of the dough should remain less than 3.08 $cm^3$ per gram, than the dough is frozen and stored.

In EP 114 451 it is disclosed, that including an exogenous quantity of a water-soluble $C_1$-$C_3$ monohydric alcohol in the dough before freezing leads to a better preproofed, frozen product.

In EP 115 108 it is stated, that the protein content of the flour after adding of gluten or wheat-protein, used for preparing the dough, should be at least 16 wt% based on a flour with 14% moisture. In US 4 406 911 it is said, that it is important that the specific volume of the dough portions is 1.98-3.08 $cm^3$/g, whereas the freezing is performed in such a way, that the core temperature reaches -1.0 to - 25.0°C within 1-6 hours. According to US 4 450 177 it is only essential to reach the right core temperature during freezing (-1 to -25°C). In US 4 839 178 the use of skim milk and acid whey solids is prescribed, when the starting flour has a protein content of 11.5-12.5 wt%.

In EP 353 036 a process is described for the preparation of dough, wherein a prefermentation (resting step) is carried out at temperatures ranging from 0-16°C.

All processes, described above, however do not lead to products, which show the required properties for a preproofed, frozen croissant. And in case the properties of the preproofed, frozen croissants are close to what is considered as desirable, a very specific process with all its limitations must be carried out.

We have looked for a process and products that overcome the above mentioned disadvantages.

We have found, that the quality of the flour is the most important factor, that is decisive for the properties of the desired preproofed frozen dough.

In fact we have found, that the best results are obtained when a flour is used, that meets the following four requirements:

1) it gives a lean dough, made from that flour, a resistance against stress $D_r$ (in Brabender units Bu) that is after 90 mins resting time less than 20% greater than the $D_r$-value after 45 mins resting time. This $D_r$-value is measured according to ICC-standard No. 114. A flour, that provides a dough in which $D_r$ increases less than 20%, when comparing the $D_r$-values at resting times of 45 and 90 minutes gives excellent results. Preferably this increase in $D_r$ is less than 15%, more preferably less than 5%.

2) The protein content of the flour must be at least 13 wt%, preferably 13-16 wt%, more preferably 14-15 wt%, based on a flour with 14% moisture.

3) Another important characteristic of the flour, that can be used according to the invention, is the amount of glutenin protein, that becomes insoluble in an SDS-solution after kneading of a lean dough made from this flour after increasing resting times of the dough. During the kneading of the dough a breakdown of the glutenins occur. During the resting time of the dough after kneading part of these (broken) glutenin fragments reassemble. We have found, that the best preproofed, frozen croissants are obtained, when the reassembly of the glutenins is not too high. Therefore the preferred flours, that we use impart to a lean dough that is kneaded and rested for about 40 mins an SDS-insoluble fraction that is less than 50% compared with the SDS insoluble fraction in the flour, in particular less than 30%, most preferably less than 15%, but more than 10%. The SDS-insoluble fraction is measured according to the method of A. Graveland, c.s. Biochem and Biophys. Res. Comm. 93 (4) 1980, pages 1189-1190.

4) The glutenin fraction of the flour must contain the following HMW-sub-units: 2*, 7+9, 5+10 according to the classification method described by Payne and coworkers in Phil. Trans. R. Soc. London B (1984) 304, 359-371.

According to this method an SDS-polyacrylamide electrophoresis is made and the bands that appear are numbered in accordance with Payne's numbering system.

An example of a flour that is in accordance with the above mentioned requirements is a Canadian flour derived from Canadian Western Red Spring wheat (CWRS). Although the dough making ingredients, that can be used according to our invention, comprise the known ingredients, we have found, that the best results are obtained when we use a bread improver-composition that is free of cysteine.

The particle size distribution of the flour particles is such, that less than 45% of the particles is more than 100 μm, preferably less than 35% of the particles is more than 100 μm, whereas 35-50% of the particles have a particle size of 60-100 μm, preferably 40-45% of the particles have this size. The particle size is measured according to sieve methods. The flour preferably has a dry gluten content of more than 14%.

The preproofed frozen croissant according to the invention can be made by any known croissant making

process. However, the best results are obtained, when a dough is made at about 14-18°C from the normal dough making ingredients including yeast, but using a flour according to the invention. The ingredients are mixed at 14-18°C. The dough is subjected to an initial fermentation for a short time, preferably 5-15 mins. To the dough up to 15% of scrap dough (based on the flour present) can be added.
The dough is laminated, using a fat that matches the consistency of the dough at 18°C. The lamination is carried out at about the same temperature as applied during the preproof step. The laminated dough is cut and formed into the desired shape. The formed dough portions are fully proofed at 25-36°C during 20-120 min. and 70-90% humidity. The products so obtained are frozen at a temperature of less than -10°C, preferably using a cooling rate of more than 0.5°C per minute.
The frozen, preproofed croissants are packed and stored at less than -18°C.
The frozen, preproofed croissants so obtained can be baked in an oven without the necessity of thawing. The croissants obtained after baking show an excellent specific volume and a very homogeneous layered structure.

The dough can contain normal ingredients used in the dough making for croissants. Examples of such ingredients are: breadimprover composition containing e.g. ascorbid acid, DATA-esters and/or enzymes, but also salt, sugar, egg, flavours etc.

Examples:

A. Samples of the flour types mentioned in table I were analysed for the composition of high mol. weight sub (= HMW) we used the numbering system described by Payne.
We found that good preproofed frozen croissants could only be obtained from flours, wherein the following HMW-sub-units are present: 2*, 7+9, 5+10.
B. Lean doughs were made using the flours mentioned in table I. The resistance against stress (Dr in BU) of those lean doughs were measured after resting times of 45 and 90 min. Herefore the method according to ICC standard No. 114 was used. From the data so obtained the increase in Dr was calculated as a function of the resting time. The results are mentioned in table II.
C. Lean doughs were made using the flours mentioned in table I. The SDS-insoluble glutenin fractions of the doughs and the flour were measured after a resting period of 40 min. Herefore the method of A. Graveland c.s., Biochem and Biophys. Res. Comm. 93 (4) 1980, pages 1189-1190 was used. From the data so obtained the ratios between the SDS-insoluble glutenin fractions were calculated. The results are mentioned in table III.
D. Preproofed, frozen croissants were made using the flours mentioned in table I.
Herefore the components mentioned in table IV were mixed at 16°C. The dough was prefermented during 10 min. This initially prefermented dough was laminated with fat (28% on dough) at 18°C. The laminated dough was cut and formed in the shape of a croissant. The shaped product was fully proofed at 32°C for 90 min (Rel. Hum 80%). The products so obtained were frozen at -18°C and stored at this temperature for a week. After this week the frozen croissants were baked without thawing. The results mentioned in table V were obtained.

Table I

| Flour type | Protein content (wt%) | HMW-subunits composition |
|---|---|---|
| 1. Sovereign | 12.24 | Null, 6+8, 5+10 |
| 2. Nimrod | 12.4 | 1, 6+8+7, 2+5+10+12 |
| 3. Emperess Queen | 11.9 | Null, 7+8, 5+10 |
| 4. Ideal | 9.1 | 1, 6+8, 2+5+10+12 |
| 5. Planett | 10.5 | 1, 6+8, 2+5+10+12 |
| 6. Strong Springs | 14.4 | 2*, 7+9, 5+10 |
| 7. Emblem | 10.1 | 1, 6+8+7, 2+12 |
| 8. Aylison | 12.0 | Null, 7+8, 4+5+10+12 |
| 9. Heygates | 12.9 | 1, 6+8+7, 2+5+10+12 |
| 10. Can. Flour | 13.2 | 2*, 7+9, 5+10 |

Table II

| Flour type | Dr (90) | Dr (45) | $\frac{Dr(90)-Dr(45)}{Dr(45)} \times 100\%$ |
|---|---|---|---|
| 1. Sovereign | 410 | 340 | 20.6 |
| 2. Nimrod | 327 | 320 | 2.2 |
| 3. Emp. Queen | 385 | 310 | 24.2 |
| 4. Ideal | 312 | 290 | 7.6 |
| 5. Planett | - | - | - |
| 6. Strong Spr | 265 | 207 | 28.0 |
| 7. Emblem | - | - | - |
| 8. Aylison | 275 | 235 | 17.0 |
| 9. Heygates | 277 | 260 | 6.5 |
| 10. Can. Flour | 217 | 210 | 3.3 |

Table III

| Flour type | SDS(40) mg/g of flour | SDS (flour) mg/g of flour | SDS(40) x 100% / SDS (flour) |
|---|---|---|---|
| 1. Sovereign | 2 | 30 | 7 |
| 2. Nimrod | 2 | 30 | 7 |
| 3. Emp. Queen | 1 | 28 | 3.5 |
| 4. Ideal | 2 | 25 | 8 |
| 5. Planett | - | 27 | - |
| 6. Strong Spr | 30 | 40 | 75 |
| 7. Emblem | 1 | 20 | 5 |
| 8. Aylison | 2 | 32 | 6 |
| 9. Heygates | 1 | 32 | 3 |
| 10. Can. Flour | 10 | 35 | 30 |

Table IV

Baker's %

| | |
|---|---|
| Flour | 100 % |
| Improver* | 3.0 % |
| Yeast | 8.0 % |
| Water | 53.0 % |
| Scrap dough | 15.0 % |
| Salt, sugar, egg, flavour | 17.1 % |

* consisting of Ascorbic acid, DATA-esters, enzymes.

Table V

| Flour | S.V.* | Extern. quality | Intern. quality |
|---|---|---|---|
| 1. Sovereign | 3.21 | Poor, dull, pale no flake, collapse on baking | large holes; bready |
| 2. Nimrod | 3.15 | Poor, dull, no flake; collapse on baking | large holes; bready |
| 3. Emp. Queen | 3.78 | Fair, dull; slightly flaky no oven spring | large holes; bready |
| 4. Ideal | 3.11 | very poor, dull, pale, no flake collapse on baking | large holes; bready |
| 5. Planett | 3.08 | very poor, dull, pale, no flake collapse on baking | large holes; bready |
| 6. Strong Spr. | 3.81 | fair, dull, slightly flaky collapse on baking | large holes; text. break-down |
| 7. Emblem | 3.21 | poor, dull, pale no flake; collapse | large holes; bready |
| 8. Aylison | 3.18 | poor, dull, pale no flake, collapse | large holes; bready |

| | | | |
|---|---|---|---|
| 9. Heygraves | 4.13 | fair-golden appearance; no oven spring | Text. collapse |
| 10. Can flour | 7.10 | good flaky with golden colour good oven-spring | good typically croissant |

S.V.* measured using the seed displacement method (ml/g).

## Claims

1. Preproofed frozen croissant, made from a dough in which the normal dough making ingredients are present,
characterised by the presence of a flour in the dough making mixture that meets the following requirements:
1) it gives a lean dough a resistance against stress ($D_r$ in BU) that is after 90 mins resting time less than 20% greater than the $D_r$-value after 45 mins resting time.
2) it contains at least 13 wt% protein (based on flour with 14% moisture),
3) it imparts to a lean dough, that is kneaded and rested during about 40 mins an SDS-insoluble fraction, that is less than 50% compared with the SDS-insoluble fraction of the flour.
4) the glutenin-fraction of the flour contains the following high molecular weight sub-units, according to Payne: 2*, 7+9, 5+10.

2. Preproofed frozen croissant according to claim 1, wherein the flour is a flour that gives a lean dough a $D_r$-value at 90 mins resting time that is less than 15%, preferably less than 5% greater than the $D_r$-value at 45 mins resting time.

3. Preproofed frozen croissant, according to claim 1, wherein the dough is made from a flour with a protein content of 13-16 wt%, preferably 14-15 wt%.

4. Preproofed, frozen croissant, according to claim 1, wherein the dough is made from a flour with a particle size distribution, so that less than 45%, preferably less than 35% has a particle size of more than 100 µm, whereas 35-50%, preferably 40-45% of the particles have a size of 60-100 µm.

5. Preproofed, frozen croissant, according to claim 1, wherein the dough is made of a flour with a dry gluten content of more than 14%.

6. Preproofed frozen croissant according to claim 1, wherein the flour imparts to a lean dough that is kneaded and rested during about 40 mins an SDS-insoluble fraction, that is less than 30%, in particular less than 15%, but more than 10% compared with the SDS-insoluble fraction of the flour.

7. Preproofed, frozen croissant according to claim 1, wherein the dough is made from a Canadian Western red spring flour (= CWRS).

8. Preproofed, frozen croissant according to claim 1, wherein the dough is made from dough making ingredients, that do not contain cysteine.

9. Process for the preparation of preproofed, frozen croissants according to claim 1 consisting of the following steps:

- mixing of the normal dough ingredients, including yeast at 14-18°C, but using a flour as mentioned in claim 1.
- giving an initial fermentation to the dough for a short time at a maximum temperature of 18°C.
- laminating and forming the dough at nearly the same temperature.
- proofing the formed dough portions at 25-36°C during 20-120 mins.
- freezing the dough portion below -10°C, using a cooling rate of more than 0.5°C per min.
- storing the frozen, preproofed croissants below - 20°C.

**10.** Baked croissants, obtainable after baking of the preproofed, frozen croissants of claims 1-8.

**Patentansprüche**

**1.** Backfertiges (entwickeltes), tiefgefrorenes Hörnchen bzw. Croissant, hergestellt aus einem Teig, in dem die üblichen Teigherstellungsbestandteile vorliegen, gekennzeichnet durch das Vorliegen eines Mehles in der Teigherstellungsmischung, das den folgenden Anforderungen entspricht:
1) es verleiht dem mageren Teig eine Beständigkeit gegen Belastung ($D_r$ in BU), die nach 90 min Ruhezeit weniger als 20 % größer als der $D_r$-Wert nach 45 min Ruhezeit ist;
2) es enthält weniger als 13 Gew.-% Protein (bezogen auf ein Mehl mit 14 % Feuchtigkeit),
3) es verleiht einem mageren Teig, der geknetet und etwa 40 min ruhengelassen wurde, eine SDS-unlösliche Fraktion, die kleiner als 50 % ist, verglichen mit der SDS-unlöslichen Fraktion des Mehles,
4) die Gluteninfraktion des Mehles enthält die folgenden hochmolekularen Untereinheiten gemäß Payne: 2*, 7+9, 5+10.

**2.** Backfertiges, tiefgefrorenes Croissant gemäß Anspruch 1, in welchem das Mehl ein Mehl ist, das einem mageren Teig bei 90 min Ruheheit einen $D_r$-Wert verleiht, der weniger als 15 %, vorzugsweise weniger als 5 % größer als der $D_r$-Wert bei 45 min Ruhezeit ist.

**3.** Backfertiges, tiefgefrorenes Croissant gemäß Anspruch 1, in welchem der Teig aus einem Mehl mit einem Proteingehalt von 13 bis 16 Gew.-%, vorzugsweise von 14 bis 15 Gew.-%, hergestellt ist.

**4.** Backfertiges, tiefgefrorenes Croissant gemäß Anspruch 1, in welchem der Teig aus einem Mehl mit einer solchen Teilchengrößenverteilung hergestellt ist, daß weniger als 45 %, vorzugsweise weniger als 35 %, eine Teilchengröße von mehr als 100 µm haben, während 35 bis 50 %, vorzugsweise 40 bis 45 %, der Teilchen eine Größe von 60 bis 100 µm haben.

**5.** Backfertiges, tiefgefrorenes Croissant gemäß Anspruch 1, in welchem der Teig aus einem Mehl mit einem Trockenglutengehalt von mehr als 14 % hergestellt ist.

**6.** Backfertiges, tiefgefrorenes Croisssant gemäß Anspruch 1, in welchem das Mehl einem mageren Teig, der geknetet und etwa 40 min ruhengelassen wurde, eine SDS-unlösliche Fraktion verleiht, die kleiner als 30 %, vorzugsweise kleiner als 15 %, jedoch größer als 10 % ist, verglichen mit der SDS-unlöslichen Fraktion des Mehles.

**7.** Backfertiges, tiefgefrorenes Croissant gemäß Anspruch 1, in welchem der Teig aus einem kanadischen Western Red Spring Mehl (= CWRS) hergestellt ist.

**8.** Backfertiges, tiefgefrorenes Croissant gemäß Anspruch 1, in welchem der Teig aus Teigherstellungsbestandteilen hergestellt ist, die kein Cystein enthalten.

**9.** Verfahren zur Herstellung von backfertigen, tiefgefrorenen Croissants gemäß Anspruch 1, bestehend aus den folgenden Schritten:
- Mischen der üblichen Teigbestandteile einschließlich Hefe bei 14 bis 18°C, wobei jedoch ein in Anspruch 1 genanntes Mehl verwendet wird,
- Unterziehen des Teiges einer kurzzeitigen Anfangsfermentation bei einer maximalen Temperatur von 18°C,
- Laminieren und Formen des Teiges bei fast der gleichen Temperatur,
- Fertigfermentieren der geformten Teigportionen bei 25 bis 36°C während 20 bis 120 min,
- Einfrieren der Teigportionen unterhalb von -10°C unter Anwendung einer Kühlgeschwindigkeit von

mehr als 0,5°C/min,
- Lagern der tiefgefrorenen, backfertigen Croissants unterhalb von -20°C.

**10.** Gebackene Croissants, erhältlich nach dem Backen der backfertigen, tiefgefrorenen Croissants gemäß den Ansprüchen 1 bis 8.

**Revendications**

**1.** Croissant qui est levé et congelé, fabriqué à partir d'une pâte dans laquelle sont présents les ingrédients normaux de fabrication d'une pâte, caractérisé par la présence d'une farine dans le mélange de fabrication de la pâte qui satisfait aux exigences suivantes :
1) Elle donne à une pâte maigre une résistance à la contrainte ($D_r$ en Bu) qui après un temps de repos de 90 minutes est moins de 20% supérieure à la valeur $D_r$ mesurée après un temps de repos de 45 minutes.
2) Elle contient au moins 13% en masse de protéine (par rapport à une farine ayant 14% d'humidité).
3) Elle confère à une pâte maigre qui est pétrie et qu'on a laissée reposer pendant environ 40 minutes, une fraction insoluble dans le SDS inférieure à 50% par rapport à la fraction insoluble dans le SDS de la farine.
4) La fraction gluténine de la farine contient les sous-unités à masse moléculaire élevée suivantes, en accord avec Payne : 2*, 7+9, 5+10.

**2.** Le croissant qui est levé et congelé selon la revendication 1, dans lequel la farine est une farine qui, pour un temps de repos de 90 minutes, donne à une pâte maigre une valeur $D_r$ qui est moins de 15%, de préférence moins de 5% supérieure à la valeur $D_r$ pour un temps de repos de 45 minutes.

**3.** Le croissant qui est levé et congelé selon la revendication 1, dans lequel la pâte est fabriquée à partir d'une farine ayant une teneur en protéine de 13-16% en masse, de préférence 14-15% en masse.

**4.** Le croissant qui est levé et congelé selon la revendication 1, dans lequel la pâte est fabriquée à partir d'une farine ayant une répartition de la taille de particule telle que moins de 45%, de préférence moins de 35% a une taille de particule supérieure à 100 μm, alors que 35-50%, de préférence 40-45% des particules a une taille de 60-100μm.

**5.** Le croissant qui est levé et congelé selon la revendication 1, dans lequel la pâte est fabriquée avec une farine ayant une teneur en gluten sec supérieure à 14%.

**6.** Le croissant qui est levé et congelé selon la revendication 1, dans lequel la farine confère à une pâte maigre que l'on a pétrie et laissée reposer pendant environ 40 minutes une fraction insoluble dans le SDS inférieure à 30%, en particulier inférieure à 15%, mais supérieure à 10% par rapport à la fraction insoluble dans le SDS de la farine.

**7.** Le croissant qui est levée et congelé selon la revendication 1, dans lequel la pâte est fabriquée à partir d'une farine de blé canadien Rouge de Printemps (=CWRS).

**8.** Le croissant qui est levé et congelé selon la revendication 1, dans lequel la pâte est fabriquée à partir d'ingrédients de fabrication d'une pâte ne contenant pas de cystéine.

**9.** Procédé pour la préparation de croissants qui sont levés et congelés selon la revendication 1, comprenant les étapes suivantes:
- mélanger les ingrédients normaux de pâte, y compris de la levure, à 14-18°C, mais en utilisant une farine selon la revendication 1.
- donner une levage initial à la pâte pendant une courte période de temps à une température maximale de 18°C.
- feuilleter et mettre la pâte en forme pratiquement à la même température.
- faire lever les parties de pâte formées à 25-36°C pendant 20-120 minutes.
- congeler la partie de pâte à une température inférieure à -10°C, à une vitesse de refroidissement supérieure à 0,5°C par minute.
- stocker les croissants qui sont levés et congelés à une température inférieure à - 20°C.

**10.** Croissants cuits pouvant être obtenus après la cuisson des croissants qui sont levés et congelés selon les revendications 1-8.